**Europäisches Patentamt**

**European Patent Office**

**Office européen des brevets**

(11) Veröffentlichungsnummer: **0 104 307**
**B1**

# EUROPÄISCHE PATENTSCHRIFT

(45) Veröffentlichungstag der Patentschrift:
**29.10.86**

(21) Anmeldenummer: **83103639.7**

(22) Anmeldetag: **14.04.83**

(51) Int. Cl.⁴: **B 01 D 33/24**, B 01 D 33/26

(54) **Grossflächiges Rotationsscheibenfilterelement für Kesselfilter.**

(30) Priorität: **31.08.82 DE 3232354**

(43) Veröffentlichungstag der Anmeldung:
**04.04.84 Patentblatt 84/14**

(45) Bekanntmachung des Hinweises auf die Patenterteilung:
**29.10.86 Patentblatt 86/44**

(84) Benannte Vertragsstaaten:
**AT CH DE FR GB LI NL**

(56) Entgegenhaltungen:
**CH - A - 479 324**
**DE - A - 2 705 046**
**DE - A - 2 846 216**
**DE - C - 319 500**
**GB - A - 763 495**
**US - A - 4 282 094**

(73) Patentinhaber: **Anton Steinecker Maschinenfabrik GmbH, Münchenerstrasse 18, D-8050 Freising (DE)**

(72) Erfinder: **Baur, Rolf, Dipl.-Ing.(FH), Heubacherstrasse, D-7072 Heubach-Lautern (DE)**
Erfinder: **Gruber, Bernhard, Gartenstrasse 10, D-7076 Waldstetten (DE)**

(74) Vertreter: **Tetzner, Volkmar, Dr.-Ing. Dr. Jur., Van-Gogh-Strasse 3, D-8000 München 71 (DE)**

## Beschreibung

Die Erfindung betrifft ein Rotationsscheibenfilterelement entsprechend dem Oberbegriff des Anspruches 1.

Ein Rotationsscheibenfilterelement entsprechend dem Oberbegriff des Anspruches 1 ist durch die DE-A 2 705 046 bekannt.

Derartige Rotationsscheibenfilterelemente werden auf einer Zentralwelle angeordnet und dichtend fest zusammengespannt. Die abgeschiedenen Filtrationsrückstände setzen sich hierbei auf dem Filtergewebe der einzelnen Filterelemente ab und bilden den Filterkuchen. Zur Entfernung des Filterkuchens wird das Filterpaket in Rotation versetzt, so dass der Filterkuchen durch Zentrifugalkraft abgeschleudert wird.

Damit sich die einzelnen Rotationsscheibenfilterelemente unter der Wirkung des sehr beträchtlichen Gewichtes des Filterkuchens nicht durchbiegen, stützen sich die aus der Praxis bekannten Rotationsscheibenfilterelemente gemäss DE-A 2 705 046 über Stützfüsschen auf dem jeweils darunterliegenden Filterelement ab. Diese Stützfüsschen sind im Abstand gleichmässig über den ganzen Aussenumfang des Rotationsscheibenfilterelementes verteilt angeordnet.

Nachteilig an dieser Abstützung ist, dass die Stützfüsschen beim Aufbringen einer Grundanschwemmung auf das Filtergewebe bei gleichzeitiger langsamer Rotation des Filterpaketes eine Wirbelbildung im Bereich jedes Stützfüsschens verursachen, so dass im Wirbelbereich Abschwemmungen auftreten oder überhaupt keine Grundanschwemmung erfolgt. Mit Beginn der eigentlichen Filtration dringt an diesen Stellen schlechtes Filtrat oder Unfiltrat in das Filtrat ein und verunreinigt dieses. Nur ein gleichmässiger Filterkuchenaufbau garantiert jedoch von Anfang an über die Gesamtdauer einer Filtrationscharge eine gleichbleibend wirksame freie Filterfläche und damit eine gleichmässige Leistung. Abgeschwemmte oder blanke Stellen verstopfen das Stützgewebe schnell und verkleinern damit die freie wirksame Filterfläche.

Ein weiterer Nachteil der Stützfüsschen tritt beim Abreinigen der Rotationsscheibenfilteremente auf. Die Stützfüsschen stehen nämlich dem durch Zentrifugalkraft abzuschleudernden Filterkuchen im Wege und behindern ein freies Abgleiten der Kuchenstücke. Mehr oder weniger grosse Teilstücke werden von den Stützfüsschen festgehalten. Dadurch entsteht eine unter Umständen gefährliche Unwucht im rotierenden Filterpaket. Bei höher viskosen Filterkuchen können die Stützfüsschen auch nach aussen gebogen werden oder ganz abbrechen. Nicht selten kommt es auch vor, dass trotz längerer Rotationsdauer die Filterelemente nicht einwandfrei abgereinigt sind, sondern im Bereich der Füsschen noch Kuchenrest aufweisen.

Durch die DE-A 2 846 216 ist ferner ein Rotationsscheibenfilterelement bekannt, bei dem der Träger des Filterelementes einstückig mit einem rohrförmigen Nabenteil ausgebildet und als Kunststoffprofilteil (beispielsweise aus glasfaserverstärktem Polyesterharz) mit verhältnismässig grosser Wandstärke ausgeführt ist. Dieser Kunststoffprofilteil ist dabei an seiner Oberseite mit zur Filterachse koaxialen Rillen sowie radial verlaufenden Rillen versehen. Ein derartiger Kunststoffprofilteil ist üblicherweise hinreichend steif, so dass sich hier das oben erwähnte Durchbiegungsproblem nicht stellt.

Der Erfindung liegt die Aufgabe zugrunde, ein Rotationsscheibenfilterelement entsprechend dem Oberbegriff des Anspruches 1 so auszubilden, dass mit einer einfachen Bauweise eine hohe Stabilität, eine verbesserte Grundanschwemmung und ein störungsfreier Abreinigungsvorgang gewährleistet ist.

Diese Aufgabe wird erfindungsgemäss durch die kennzeichnenden Merkmale des Anspruches 1 gelöst.

Zweckmässige Ausgestaltungen der Erfindung sind Gegenstand der Unteransprüche.

Ein Ausführungsbeispiel der Erfindung ist in der Zeichnung veranschaulicht.

Es zeigen:

Fig. 1 eine Prinzipdarstellung zweier übereinander angeordneter Rotationsscheibenfilteremente im Schnitt;

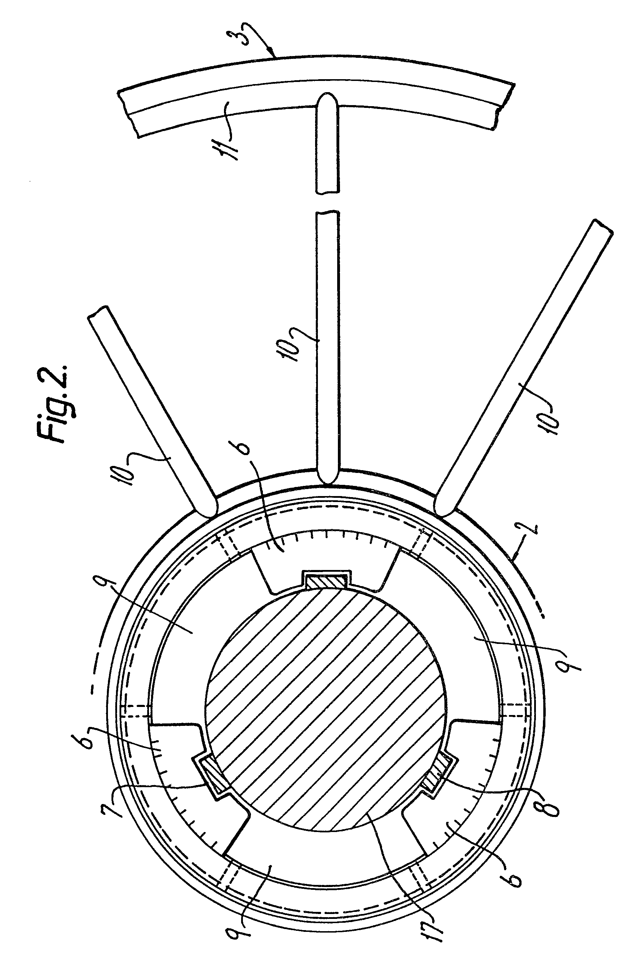

Fig. 2 eine Draufsicht auf ein Rotationsscheibenfilterelement.

Der Kesselfilter, in den die erfindungsgemässen Rotationsscheibenfilterelemente 1 eingebaut sind, kann von bekannter Bauart sein, weshalb er nachfolgend nicht näher erläutert wird.

Ein Rotationsscheibenfilterlement setzt sich aus einer Nabe 2, einem Bodenblech 3, einem Stützgewebe 4 und einem Filtergewebe 5 zusammen. Mehrere übereinander auf einer Zentralwelle 17 angeordnete Rotationsscheibenfilteremente bilden ein Filterpaket. Das Filterpaket ist über eine nicht gezeigte Einrichtung dichtend verspannt.

An der Nabe 2 ist das scheibenförmige Bodenblech 3 befestigt. Darauf liegt das Stützgewebe 4, über das das Filtergewebe 5 gespannt ist. Das Stützgewebe 4 und das Filtergewebe 5 haben ein Mittelloch, das dem Durchmesser einer Bohrung der Nabe 2 entspricht und auch in diesem Bereich angeordnet ist.

An der Nabe 2 ist an einem unteren Vorsprung 18, der axial über den Aussenumfang der Nabe 2 herausragt, eine tiefgezogene Zarge 12 des Bodenbleches 3 angeschweisst. Auf einem oberen Vorsprung 19 der Nabe 2 liegt das Stützgewebe 4 auf. Der obere Vorsprung 19 ist gegenüber dem unteren Vorsprung 18 zurückversetzt. Dadurch ergibt sich zwischen der Nabe 2 und der tiefgezogenen Zarge 12 ein freier Ringraum, der einen Sammelkanal 13 bildet. Waagrechte Bohrungen 20, die gleichmässig in der Nabe 2 angebracht sind, verbinden den Sammelkanal 13 mit einem Filtratabführkanal 9.

Der Abführkanal 9 wird dadurch gebildet, dass der Durchmesser der Bohrung der Nabe 2 grösser ist als der Aussendurchmesser der Zentralwelle 17. Zur Zentrierung der Nabe 2 auf der Zentralwelle 17 sind in der Innenbohrung der Nabe 2 je drei gleich dimensionierte Distanzstücke 6 angeschweisst. In jedem Distanzstück 6 ist eine Führungsnut 7 eingefräst, in die ein Mitnehmerkeil 8 der Zentralwelle 17 eingreift.

Das Bodenblech 3 erstreckt sich von der tiefgezogenen Zarge 12 horizontal bis zu seinem Aussenrand. In dieses Bodenblech 3 sind im Winkel von 30° zwölf radiale Sicken 10 tiefgezogen. In der Nähe des Aussenrandes befindet sich eine koaxiale Sicke 11. Die koaxiale Sicke 11 ist mit dem Sammelkanal 13 durch die zwölf radialen Sicken 10 verbunden. Die radialen Sicken 10 besitzen ein Gefälle von der koaxialen Sicke 11 zum Sammelkanal 13 hin.

Am Aussenumfang des Bodenbleches 3 ist dieses hinter der koaxialen Sicke 11 im gleichen Niveau wir vor der koaxialen Sicke 11 etwa 10 mm weiter geführt. Anschliessend ist es genau um die Höhe des Stützgewebes 4 schräg nach oben gebogen, um nach einer weiteren Biegung wieder horizontal zu verlaufen. Auf diese Weise wird innerhalb einer Verlängerung 24 eine Auflagefläche 25 für das Stützgewebe 4 gebildet.

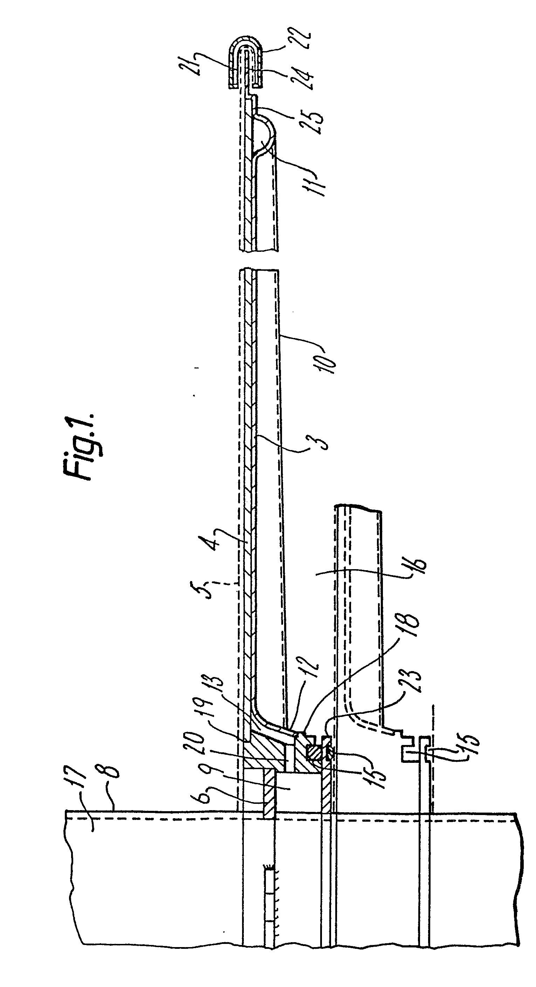

Wie aus Fig. 1 ersichtlich, wird der Trubraum 16 durch den Abstand zwischen dem Filtergewebe 5 des unteren Rotationscheibenfilterelementes und der Unterseite des Bodenbleches 3 des nächstfolgenden Rotationsscheibenfilterelementes gebildet.

Die Abdichtung zwischen den Rotationsscheibenfilterlementen erfolgt an der Nabe 2. Jeweils an der Unterseite befindet sich dort eine Nut, in die eine ringförmige Schwalbenschwanzdichtung 15 eingelegt ist.

Zur Randabdichtung eines Rotationsscheibenfilterelementes ist über das Filtergewebe 5, das um den Rand des Bodenbleches 3 herumgebogen ist, eine etwa U-förmige Ringdichtung 21 geschoben. Ein ebenfalls etwa U-förmiger Spannring 22 presst die Ringdichtung 21 flüssigkeitsdichtend um den Aussenumfang des Bodenbleches 3.

Die Funktion des erfindungsgemässen Rotationsscheibenfilterelementes ist wie folgt:

Vor Beginn der Filtration wird auf das Filtergewebe 5 eine Grundanschwemmung aufgebracht. Sie besteht aus einem Filterhilfsmittel, wie z.B. Diatomeenerde, Perlite oder Aktivkohle. Mit dieser Grundanschwemmung wird eine Schutzschicht auf das Filtergewebe 5 gelegt, die verhindert, dass sich Filtrationsrückstände in das Filtergewebe 5 einlagern und dieses dadurch verstopfen.

Das Filterhilfsmittel wird einer Trägerflüssigkeit, beispielsweise Wasser, beidosiert und im Kreislauf durch den Kesselfilter gepumpt. Diese Suspension, bestehend aus Trägerflüssigkeit und Filterhilfsmittel, gelangt in den Trubraum 16. Während die Trägerflüssigkeit das Filtergewebe 5 und das Stützgewebe 4 durchläuft, über das Bodenblech 3 und die hierin befindlichen Sicken 10 und 11 zum Sammelkanal 13 fliesst und von da durch die Bohrungen 20 der Nabe 2 in dem Filtratabführkanal 9 zusammenläuft, setzt sich das Filterhilfsmittel in einer gleichmässigen Schicht auf dem Filtergewebe 5 ab. Da wegen der Versteifung des Bodenbleches 3 durch die radialen Sikken 10 keine Stützfüsschen notwendig sind, tritt keine Wirbelbildung im Bereich der Anschwemmfläche auf. Es bildet sich daher eine gleichmässig dicke Grundanschwemmung.

Die im Bodenblech 3 an dessen Oberseite durch die Sicken 10, 11 gebildeten Vertiefungsrillen bewirken, dass entsprechend dem gleichmässigen Abfluss auch der Durchtritt der Flüssigkeit durch das Filtergewebe 5 gleichmässig an jeder Stelle des Filtergewebes erfolgt. Dadurch findet auf den Rotationsscheibenfilterelementen auch eine gleichmässige Sedimentation an der Oberfläche des Filtergewebes 5 statt.

Erfindungsgemäss wird so durch einen gleichmässigen Filterkuchenaufbau die optimale freie Filterfläche auch über die gesamte Filtrationsdauer bis zur Erschöpfung des Trubraumes 16 aufrechterhalten. Es wird dabei selbstverständlich eine gleichmässige optimale Dosierung von Filterhilfsmitteln über den gesamten Filtrationszyklus als gegeben vorausgesetzt. Nur nebenbei sei erwähnt, dass sich ein Zusatz von Filterhilfsmitteln in den Fällen erübrigt, wo das Unfiltrat schon genügend den Filterkuchen auflockernde Substanzen enthält.

Nach Beendigung der Filtration wird der Filterkuchen durch die Zentrifugalkraft der rotierenden Scheibenfilterelemente abgeschleudert, ohne dass störende Einheiten dies behindern. In sehr kurzer Zeit sind die festen Bestandteile vom Filtergewebe 5 entfernt. Anschliessend erfolgt eine Rückspülung. Noch anhaftende Partikel werden frei- und weggespült. Die Rückspülung erfolgt gegen die Filtrationsrichtung.

Da einerseits die Korngrössenverteilung im Filterhilfsmittel starken Schwankungen unterworfen ist und andererseits die Porengrösse des Filtergewebes 5 grösser ist als ein Grossteil der Filterhilfsmittelpartikel, werden bis zum Aufbau der die filtrierende Wirkung hervorrufenden Brückenbildung mehr oder weniger viele Filterhilfsmittelteilchen durch das Filtergewebe 5 hindurchwandern. Infolge ihre relativ hohen spezifischen Gewichtes setzen sich diese Teilchen auf dem Stützgewebe 4 und der Oberfläche des Bodenbleches 3 ab. Die Fliessgeschwindigkeit des Filtrates ist zu gering, um diese Ablagerungen während des Filtratflusses mitzureissen. Demzufolge liegen diese Teilchen nach beendeter Filtration unverändert an ihrem Platz.

Durch die Rotation der Scheibenfilterelemente zum Zwecke der Kuchenentfernung werden diese Teilchen, die zwischen dem Bodenblech 3 und dem Filtergewebe 5 liegen, an den äusseren Dichtrand des Rotationsscheibenfilterelementes geschleudert und sinken bei Stillstand dieses Elementes in die koaxiale Sicke 11.

Dort werden sie von der zuerst durch die radialen Sicken 10 einströmenden Rückspülflüssigkeit aufgewirbelt und freigeströmt. Bei der folgenden Spülung in Filtrationsrichtung, die mit einem Vielfachen der Filtrationsgeschwindigkeit erfolgt, werden die lockeren Filterhilfsmittelteilchen mitgerissen und aus dem Inneren der Rotationsscheibenfilterelemente herausbefördert. Das Gefälle innerhalb der radialen Sicken 10 wirkt hierbei unterstützend.

Bei Rotationsscheibenfilterelementen ohne die erfindungsgemässen Sicken 10 und 11 ist demgegenüber ein Entfernen dieser Einlagerungen nur mit mechanischer Hilfe möglich, wie z.B. durch Ausspritzen der zuvor aus dem Kessel ausgebauten Rotationsscheibenfilterelemente mit einem Dampfstrahl.

Die Rotationsscheibenfilterelemente können durch das Gefälle, das die radialen Sicken 10 zum Sammelkanal 13 hin aufweisen völlig leerlaufen. Dies ist insbesonders bei entsprechenden Verfahren und teueren Filtraten von Wichtigkeit.

Durch die Variabilität der lichten Höhe zwischen zwei übereinander angeordneten Rotationsscheibenfilterelementen kann der Trubraum 16 verändert werden und damit dem unterschiedlichen Trubanfall angepasst werden. Diese Möglichkeit, die bei Vorrichtungen nach dem Stande der Technik nicht gegeben ist, weil die dort verwendeten Stützfüsschen nicht höhenverstellbar sind, erlaubt es, die Filter durch einfaches Umrüsten für verschiedene Filtermedien einzusetzen.

## Patentansprüche

1. Grossflächiges Rotationsscheibenfilterelement für Kesselfilter, enthaltend
   a) eine Nabe (2),
   b) ein kreisringförmiges Bodenblech (3), das an seinem inneren Rand über eine Zarge (12) mit der Nabe (2) verbunden ist,
   c) ein auf dem Bodenblech (3) angeordnetes Stützgewebe (4),
   d) ein auf dem Stützgewebe (4) aufliegendes Filtergewebe (5),
   e) einen zwischen der Zarge (12) des Bodenbleches (3) und der Nabe (2) vorgesehenen ringförmigen Sammelkanal (13), der über radiale Bohrungen (20) der Nabe (2) mit einem in der Nabe (2) vorgesehenen Abführkanal (9) in Verbindung steht, gekennzeichnet durch folgende Merkmale:
   f) das Bodenblech (3) ist durch wenigstens eine im äusseren Randbereich des Bodenbleches (3) koaxial zur Nabenachse vorgesehene äussere Sicke (11) sowie durch eine Anzahl von radial verlaufenden, gleichmässig über die gesamte Fläche des Bodenbleches (3) verteilten Sicken (10) versteift;
   g) die Sicken (10, 11) bilden zugleich an der Oberseite des Bodenbleches (3) zur Abführung des Filtrates dienende Vertiefungsrillen, wobei die radialen Sicken (10) die äussere Sicke (11) mit dem ringförmigen Sammelkanal (13) verbinden.
   2. Rotationsscheibenfilterelement nach Anspruch 1, dadurch gekennzeichnet, dass der Winkelabstand der radial verlaufenden Sicken (10) 15 bis 60°, vorzugsweise 30°, beträgt.
   3. Rotationsscheibenfilterelement nach Anspruch 1, dadurch gekennzeichnet, dass das Bodenblech (3) waagerecht ausgerichtet ist.
   4. Rotationsscheibenfilterelement nach Anspruch 1, dadurch gekennzeichnet, dass das Bodenblech (3) am äusseren Umfang ausserhalb der äusseren Sicke (11) im wesentlichen auf gleichem Niveau wie innerhalb der Sicke (11) eine Auflagefläche (25) für das Stützgewebe (4) bildet.
   5. Rotationsscheibenfilterelement nach Anspruch 4, dadurch gekennzeichnet, dass eine ausserhalb der Auflagefläche (25) befindliche Verlängerung (24) des Bodenbleches (3) um die Höhe des Stützgewebes (4) nach oben gebogen ist.

## Claims

1. Rotary disk filter element having a large surface area for tank filters, comprising
   a) a hub (2),
   b) a circular bottom plate (3) which at its inner rim is connected with the hub (2) by means of a border (12),
   c) a supporting mesh (4) provided on the bottom plate (3),
   d) a filter mesh (5) arranged on the supporting mesh (4),
   e) an angular collecting channel (13) which is provided between the border (12) of the bottom plate (3) and the hub (2) and which is connected with a drainage channel (9) provided in the hub (2) by means of radial bores (20) in the hub (2), characterised by the following features:
   f) the bottom plate (3) is stiffened by at least one outer corrugation (11) provided coaxially to the hub axis in the outer region of the bottom plate (3) and by a plurality of radial corrugations (10) which are evenly arranged over the whole surface of the bottom plate (3);
   g) said corrugations (10, 11) also form recessed grooves provided at the upper side of the bottom plate (3) for drainage of the filtrate, the radial corrugations (10) connecting the outer corrugation (11) with the annular collecting channel (13).
   2. Rotary disk filter element according claim 1, characterised in that the angular spacing of the radial corrugations (10) is 15 to 60°, preferably 30°.
   3. Rotary disk filter element according claim 1, characterised in that the bottom plate (3) is aligned horizontally.
   4. Rotary disk filter element according claim 1, characterised in that on its outer periphery the bottom plate (3) outside the outer corrugation (11) and substantially at the same level as within the corrugation (11) provides a supporting surface (25) for the supporting mesh (4).
   5. Rotary disk filter element according claim 4, characterised in that an extension (24) of the bottom plate (3) provided outside the supporting surface (25) is bent upwards by the height of the supporting mesh (4).

## Revendications

1. Elément filtrant à grande surface en forme de disque rotatif utilisé dans une enceinte ou un filtrepresse, comprenant:

a) un moyeu (2),

b) une tôle circulaire d'assise (3) dont un cintrage (12) relie le bord intérieur au moyeu (2),

c) un tissu support (4) disposé sur la tôle d'assise (3),

d) un tissu filtrant (5) reposant sur le tissu support (4),

e) un canal collecteur annulaire (13) prévu entre le cintrage (12) de la tôle d'assise (3) et le moyeu (2) et communiquant par des trous radiaux (20) de ce moyeu (2) avec un canal d'évacuation (9) prévu dans ce dernier, caractérisé par les particularités suivantes:

f) la tôle d'assise (3) est ridifiée par un suage extérieur (11) situé à proximité de son bord extérieur et coaxial à l'axe du moyeu, ainsi que par plusieurs suages radiaux (10) répartis uniformément sur la surface totale de cette tôle (3);

g) les suages (10, 11) forment également du côté supérieur de la tôle d'assise (3) des gorges d'évacuation du filtrat, les suages radiaux (10) reliant le suage extérieur (11) au canal collecteur annulaire (13).

2. Elément filtrant en forme de disque rotatif selon la revendication 1, caractérisé en ce que la distance angulaire des suages radiaux (10) est de 15 à 60°, de préférence de 30°.

3. Elément filtrant en forme de disque rotatif selon la revendication 1, caractérisé en ce que la tôle d'assise (3) est orientée horizontalement.

4. Elément filtrant en forme de disque rotatif selon la revendication 1, caractérisé en ce que la tôle d'assise (3) forme sur le pourtour extérieur, à l'extérieur du suage extérieur (11), une surface d'appui (25) destinée au tissu support (4) et située au même niveau que sa partie se trouvant à l'intérieur du suage (11).

5. Elément filtrant en forme de disque rotatif selon la revendication 4, caractérisé en ce qu'un prolongement (24) de la tôle d'assise (3) se trouvant à l'extérieur de ladite surface d'appui (25) est replié vers le haut sur une hauteur correspondant à l'épaisseur du tissu support (4).

Fig.1.

Fig.2.